# FASCICULE DE BREVET EUROPEEN

(11) **EP 4 480 359 B1**
(45) Date de publication et mention de la délivrance du brevet: **18.02.2026**
(21) Numéro de dépôt: 24182303.8
(22) Date de dépôt: 14.06.2024
(51) Int. Cl.: A47J 31/44

(54) **SYSTEME DE FIXATION REVERSIBLE D'UN ACCESSOIRE A UNE SORTIE DE DISTRIBUTION D'EAU CHAUDE/VAPEUR, ACCESSOIRE ET MACHINE DE DISTRIBUTION DE BOISSONS ASSOCIEES**
SYSTEM ZUR REVERSIBLEN BEFESTIGUNG EINES ZUBEHÖRTEILS AN EINEN HEISSWASSER-/DAMPFAUSGABEAUSGANG, ENTSPRECHENDES ZUBEHÖR UND GETRÄNKEAUSGABEMASCHINE
SYSTEM FOR REVERSIBLY ATTACHING AN ACCESSORY TO A HOT WATER/STEAM DISPENSING OUTLET, ASSOCIATED ACCESSORY AND BEVERAGE DISPENSING MACHINE

(30) Priorité: 20.06.2023 FR 2306385
(43) Date de publication de la demande: 25.12.2024
(73) Titulaire: SEB S.A., 69130 Ecully (FR)
(72) Inventeur: CORNU, Léo, 69134 ECULLY CEDEX (FR); GIRAUD, Jean-Baptiste, 69134 ECULLY CEDEX (FR); GUILLOT, Annabelle, 69134 ECULLY CEDEX (FR)
(74) Mandataire: SEB Développement

(56) Documents cités:
- EP-A1- 2 606 783
- EP-A1- 2 946 706
- EP-A1- 4 173 530
- CN-A- 106 108 663
- CN-A- 109 528 007
- US-A1- 2018 271 316

## Description

### Domaine technique

La présente invention se rapporte au domaine de la fixation d'accessoire à une sortie de distribution d'eau chaude et/ou de vapeur d'une machine de distribution de boisson, et notamment d'une machine à café. De tels accessoires sont par exemple un accessoire de distribution d'eau chaude ou des dispositifs de moussage de lait tels un pot à lait, ou une buse vapeur ou une buse de moussage définissant des canaux d'entrée de lait, de vapeur et avantageusement d'air et un canal de sortie de lait moussé.

### Etat de la technique

Il est connu de CN109528007 une machine à café équipée d'un dispositif de moussage de lait comprenant un système de fixation à une sortie de distribution de vapeur. Le système de fixation comprend un loquet flexible positionné sur la machine à café à proximité de la sortie de distribution de vapeur et un relief de verrouillage formé sur un corps du dispositif de moussage et propre à coopérer avec le loquet.

Un tel système de fixation permet une fixation réversible du dispositif de moussage de lait à la sortie de distribution de vapeur.

Cependant, un tel système de fixation n'est pas optimisé et ne permet pas de garantir une sécurité optimale de l'utilisateur. En effet, il existe un risque d'éjection du dispositif de moussage ou de projection de vapeur en direction de l'utilisateur en cas de surpression, liée notamment à l'encrassement du dispositif de moussage. En outre la manipulation du système de fixation est complexe pour l'utilisateur.

### Résumé de l'invention

La présente invention vise à remédier à ces inconvénients.

Le problème technique à la base de l'invention consiste à proposer un système de fixation réversible d'un accessoire à une sortie de distribution de d'eau chaude et/ou de vapeur d'une machine de distribution de boisson permettant d'assurer la sécurité de l'utilisateur et dont la manipulation est facilitée.

A cet effet, l'invention a pour objet un système de fixation réversible d'un accessoire à une sortie de distribution d'eau chaude et/ou de vapeur d'une machine de distribution de boisson, le système de fixation comprenant un corps principal et un élément de verrouillage. Conformément à l'invention, l'élément de verrouillage est reçu dans le corps principal et comprend deux bras élastiquement déformables propres à coopérer avec au moins un relief de verrouillage formé sur la sortie de distribution, les bras étant propres à être déplacés entre une position de verrouillage de l'accessoire sur la sortie de distribution et une position de déverrouillage.

Grâce à l'invention, la fixation de l'accessoire sur la sortie de distribution d'eau chaude et/ou de vapeur est optimisée car l'élément de verrouillage est reçue/protéger par le corps principal et comprend deux bras élastiquement déformables permettant de verrouiller de manière fiable et sécuritaire l'accessoire sur la sortie de distribution. En outre la manipulation du système de fixation est simple pour l'utilisateur.

Selon des aspects avantageux mais non obligatoires de l'invention, un tel système de fixation peut incorporer une ou plusieurs des caractéristiques suivantes, prises dans toute combinaison techniquement admissible.

Selon une caractéristique avantageuse de l'invention, l'élément de verrouillage comprend une surface d'appui, et les bras sont propres à être déplacés dans la position de déverrouillage via un appui utilisateur sur la surface d'appui et à retrouver la position de verrouillage après arrêt de l'appui utilisateur.

Un tel agencement permet de faciliter la manipulation de l'élément de verrouillage et notamment le déplacement par l'utilisateur des bras vers la position de déverrouillage. En effet, un simple appui sur la surface d'appui suffit.

Selon une caractéristique avantageuse de l'invention, le corps principal comprend un orifice d'accès à la surface d'appui.

Un tel agencement permet de faciliter l'accès à la surface d'appui pour l'utilisateur et donc la manipulation du système de fixation.

Selon une caractéristique avantageuse de l'invention, l'élément de verrouillage comprend un orifice de passage de la sortie de distribution s'étendant entre les deux bras au travers duquel la sortie de distribution est agencée lorsque l'accessoire est fixé à la sortie de distribution.

Un tel agencement permet de garantir une fixation optimisée de l'accessoire à la sortie de distribution à l'aide du système de fixation.

Selon une caractéristique avantageuse de l'invention, chaque bras comprend un crochet propre à coopérer avec le ou l'un des reliefs de verrouillage pour verrouiller l'accessoire sur la sortie de distribution.

Un tel agencement permet un verrouillage optimisé du système de fixation sur la sortie de distribution.

Selon une caractéristique avantageuse de l'invention, chaque crochet est muni d'un chanfrein propre à coopérer avec une face avant du ou de l'un des reliefs de verrouillage pour déplacer le bras correspondant en position de déverrouillage lors de la fixation de l'accessoire à la sortie de distribution via un mouvement de translation du système de fixation le long de la sortie de distribution

Un tel agencement permet de faciliter la fixation de l'accessoire sur la sortie de distribution via un simple mouvement de translation du système de fixation et de l'accessoire le long de la sortie de distribution.

Selon une caractéristique avantageuse de l'invention, le ou chaque relief de verrouillage définit un logement de réception des ou de l'un des crochets, et chaque crochet comprend une surface de butée propre, lorsque l'accessoire est fixé à la sortie de distribution, à coopérer avec une face arrière du ou des l'un des reliefs de verrouillage délimitant le logement de réception pour maintenir l'accessoire fixé à la sortie de distribution.

Un tel agencement permet d'optimiser le verrouillage de l'accessoire sur la sortie de distribution lorsque l'accessoire est fixé sur celle-ci à l'aide du système de fixation.

Selon une caractéristique avantageuse de l'invention, le corps principal comprend au moins un relief de butée propre à limiter la rotation du corps principal par rapport à la sortie de distribution.

Un tel agencement permet de prédéterminer l'amplitude de rotation de l'accessoire par rapport à la sortie de distribution offerte à l'utilisateur lorsque l'accessoire est fixé à la sortie de distribution.

Selon une caractéristique avantageuse de l'invention, la position de verrouillage est une position de repos de l'élément de verrouillage dans laquelle les bras sont élastiquement rappelés lorsqu'aucune contrainte n'est exercée sur l'élément de verrouillage.

Selon une caractéristique avantageuse de l'invention, l'élément de verrouillage a une forme globale hexagonale et les deux bras s'étendent entre la surface d'appui, formant une extrémité supérieur de l'élément de verrouillage et une surface de liaison, formant une extrémité inférieur de l'élément de verrouillage.

Selon une caractéristique avantageuse de l'invention, la surface d'appui, les deux bras et la surface de liaison sont formés par une pièce monobloc.

Selon une caractéristique avantageuse de l'invention, en position de déverrouillage la surface d'appui est plus proche de la surface de liaison qu'en position de verrouillage.

Selon une caractéristique avantageuse de l'invention, l'orifice de passage est délimité par les bras, la surface d'appui et la surface de liaison.

L'invention a également pour objet un accessoire pour machine de distribution de boisson comprenant un système de fixation réversible de l'accessoire à une sortie de distribution d'eau chaude et/ou de vapeur de la machine de distribution de boisson, dans lequel le système de fixation est tel que décrit ci-dessus.

Selon une caractéristique avantageuse de l'invention, l'accessoire est choisi parmi : un accessoire de distribution d'eau chaude ou un dispositif de moussage de lait tel un pot à lait, ou une buse vapeur ou une buse de moussage.

L'invention a également pour objet une machine de distribution de boisson comprenant une sortie de distribution d'eau chaude et/ou de vapeur et un accessoire propre à être fixé à la sortie de distribution de vapeur, dans laquelle l'accessoire est tel que décrit ci-dessus.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une machine de distribution de boisson comprenant une sortie de distribution d'eau chaude et/ou de vapeur et un accessoire conforme à un premier mode de réalisation de l'invention, muni d'un système de fixation conforme à l'invention et fixé à la sortie de distribution d'eau chaude et/ou de vapeur;
La figure 2 est une vue en perspective de l'accessoire de la figure 1 connecté à la sortie de distribution d'eau chaude et/ou de vapeur;
La figure 3 est une vue en éclaté de l'accessoire et de la sortie de distribution d'eau chaude et/ou de vapeur de la figure 2 ;
La figure 4 est une vue en coupe selon le plan de coupe horizontal selon la ligne IV-IV de l'accessoire et de la sortie de distribution d'eau chaude et/ou de vapeur de la figure 2;
La figure 5 est une vue de derrière en coupe selon le plan de coupe vertical selon la ligne V-V de l'accessoire et de la sortie de distribution d'eau chaude et/ou de vapeur de la figure 2 ;
La figure 6 est une vue en perspective d'un élément de verrouillage du système de fixation de la figure 1 ;
La figure 7 est une vue en perspective d'un accessoire conforme à un deuxième mode de réalisation de l'invention, muni d'un système de fixation conforme à l'invention;
Seuls les éléments nécessaires à la compréhension de l'invention ont été représentés. Pour faciliter la lecture des dessins, les mêmes éléments portent les mêmes références d'une figure à l'autre.

On notera que dans ce document, les termes « horizontal », « vertical », « inférieur », « supérieur », « haut », « bas », « avant », « arrière », « longitudinal », « transversal », employés pour décrire la machine de distribution de boisson font référence à ce dispositif en situation d'usage, lorsqu'il repose à plat sur un plan de travail.

De plus les termes « amont » et « aval » ou « entrée » et « sortie » sont définis en fonction d'un sens de circulation de la boisson ou de la vapeur dans la machine de distribution de boisson.

Les termes « externe » et « interne » de même que les termes « extérieur » et « intérieur » sont définis par rapport à un axe central de la machine de distribution de boisson. Ainsi une portion/partie interne sera plus proche de l'axe central qu'une portion/partie externe.

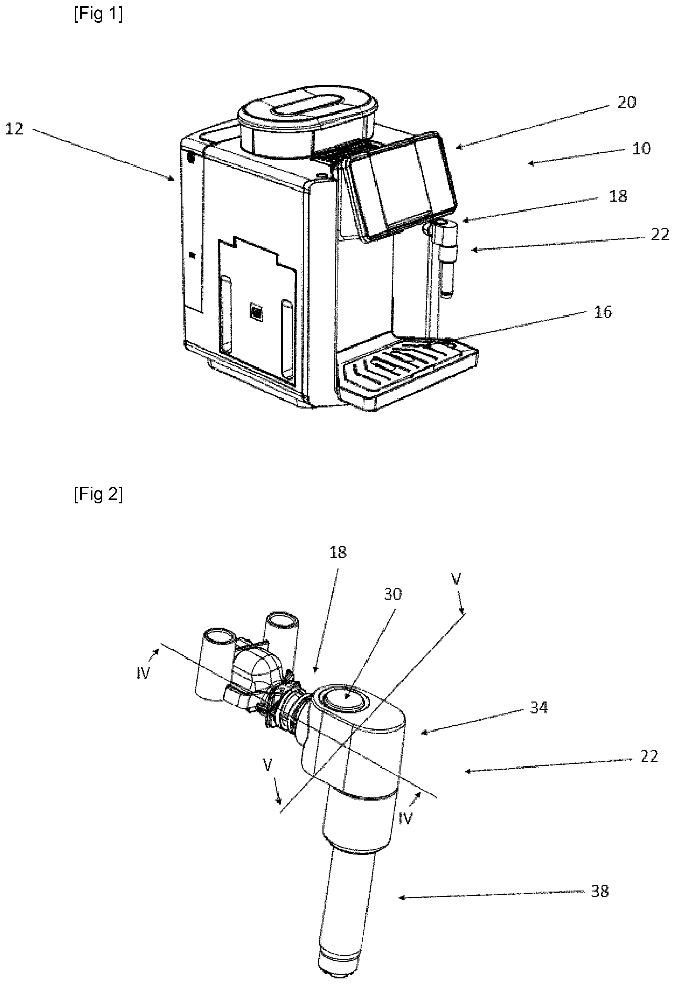

La machine de distribution de boisson représentée à la figure 1 est une machine à café 10. En variante, la machine de distribution de boisson est une machine de distribution d'eau chaude ou de thé.

La machine à café 10 est avantageusement une machine à café automatique.

La machine à café 10 comporte un bâti 12 et une zone de réception 16 d'un contenant ou récipient sur laquelle un contenant/récipient, non représenté, peut être disposé.

La machine à café 10 comprend également une tête de distribution de boisson non représentée et une sortie de distribution d'eau chaude et/ou de vapeur 18.

La machine à café 10 comprend avantageusement une interface homme machine 20 via laquelle un utilisateur est propre à sélectionner un type de boisson à distribuer et avantageusement à saisir des paramètres de réglage de la machine à café 10.

La machine à café 10 comporte également une unité de préparation de boisson, non représentée, intégrée au bâti 12.

L'unité de préparation comprend un circuit de commande pour gérer la réalisation d'une boisson à partir des instructions données par l'utilisateur. L'unité de préparation comprend également un bloc de chauffe également appelé chaudière produisant de l'eau chaude et/ou de la vapeur et un réservoir formant une réserve en eau froide. Le réservoir permet d'alimenter la chaudière pour produire de l'eau chaude et/ou de la vapeur.

La machine à café 10 comprend également un accessoire 22, 122 fixé de manière réversible à la sortie de distribution d'eau chaude et/ou de vapeur 18.

Sur les figure 1 à 6, l'accessoire 22 est propre à être plongée dans un récipient de lait pour réaliser du lait moussé.

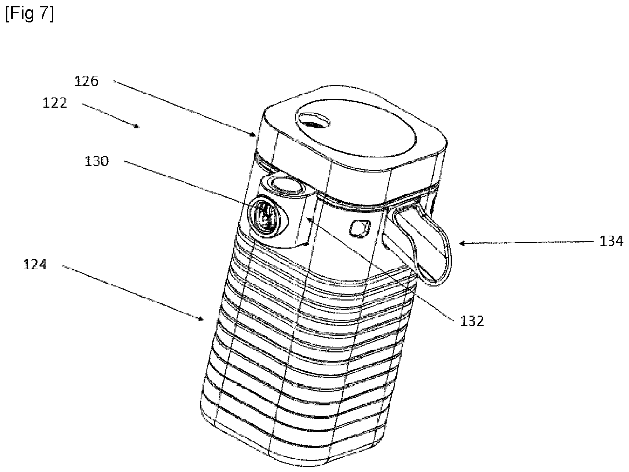

En variante, l'accessoire 22, 122 est un accessoire de distribution d'eau chaude ou un dispositif de moussage de lait tels un pot à lait 122, comme représenté à la figure 7, ou une buse de moussage définissant avantageusement un canal d'entrée de lait, un canal d'entrée de vapeur, un canal d'entrée d'air et un canal de sortie de lait moussé.

La sortie de distribution d'eau chaude et/ou de vapeur 18 est reliée fluidiquement à la chaudière.

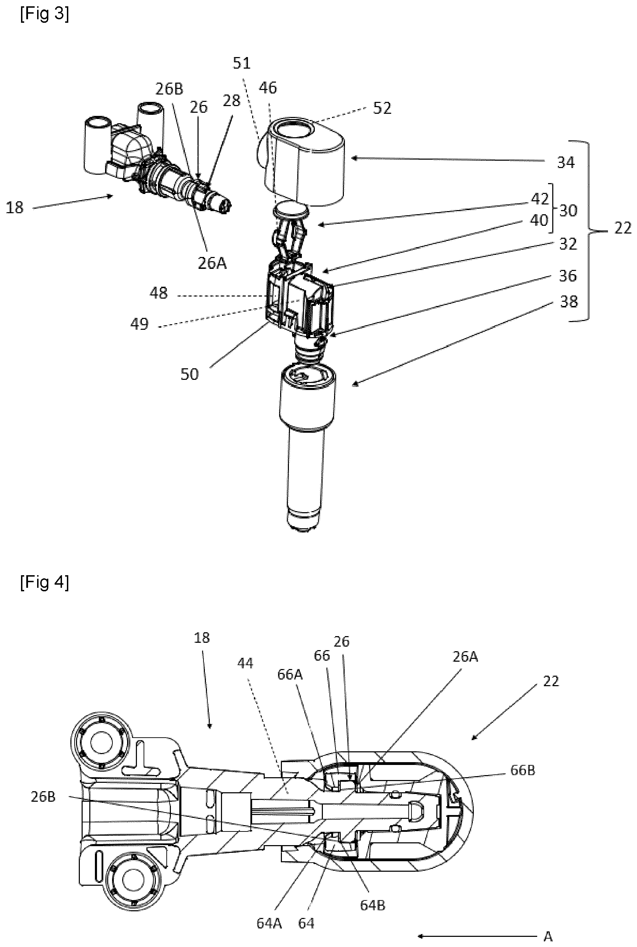

Comme représenté à la figure 3, la sortie de distribution 18 comprend un relief 26 de verrouillage de l'accessoire 22 sur la sortie de distribution 18.

Le relief de verrouillage 26 comprend une face avant 26A et une face arrière 26B.

En variante, la sortie de distribution 18 comprend plusieurs reliefs de verrouillage.

La sortie de distribution 18 comprend également au moins un relief de blocage 28 propre à limiter la rotation de l'accessoire 22 par rapport à la sortie de distribution 18. Dans l'exemple représenté à la figure 3, la sortie de distribution comprend deux reliefs de blocage 28.

Les reliefs de verrouillage 26 et de blocage 28 sont formés sur une enveloppe externe de la sortie de distribution 18.

L'accessoire 22 comprend un système 30 de fixation réversible de l'accessoire 22 à la sortie de distribution d'eau chaude et/ou de vapeur 18 et un organe 32 de réception de la sortie de distribution d'eau chaude et/ou de vapeur.

L'accessoire 22 comprend également une pièce d'habillage 34, une sortie 36 d'amenée de vapeur/eau chaude et une buse vapeur 38 propre à être plongée dans un récipient de lait.

Le système de fixation 30 comprend un corps principal 40 et un élément de verrouillage 42 reçu dans le corps principal 40.

L'élément de verrouillage 42 est propre à maintenir le corps principal 40 et donc l'accessoire 22 fixé à la sorti de distribution 18.

Avantageusement le corps principal 40 est monobloc avec l'organe de réception 32 ou forme une seule et même pièce avec l'organe de réception 32.

Avantageusement encore le corps principal 40, l'organe de réception 42 et la sortie d'amenée de vapeur/eau chaude 36 sont monoblocs.

Comme représenté à la figure 4, l'organe de réception 32 comprend un orifice 44 d'insertion de la sortie de distribution 18.

L'organe de réception 32 comprend également, comme visible à la figure 3, un orifice 46 d'accès à l'élément de verrouillage 42 pour un utilisateur via lequel l'utilisateur est propre à manipuler l'élément de verrouillage 42. L'orifice d'accès 46 est situé sur une partie supérieure de l'organe de réception 32.

L'organe de réception 32 définit un logement 48 d'accueil de l'élément de verrouillage 42 et un logement 49 d'accueil de la sortie de distribution 18.

Le logement d'accueil 48 est délimité par l'orifice d'accès 46, l'orifice d'insertion 44 et une paroi inférieure 50 d'appui de l'élément de verrouillage.

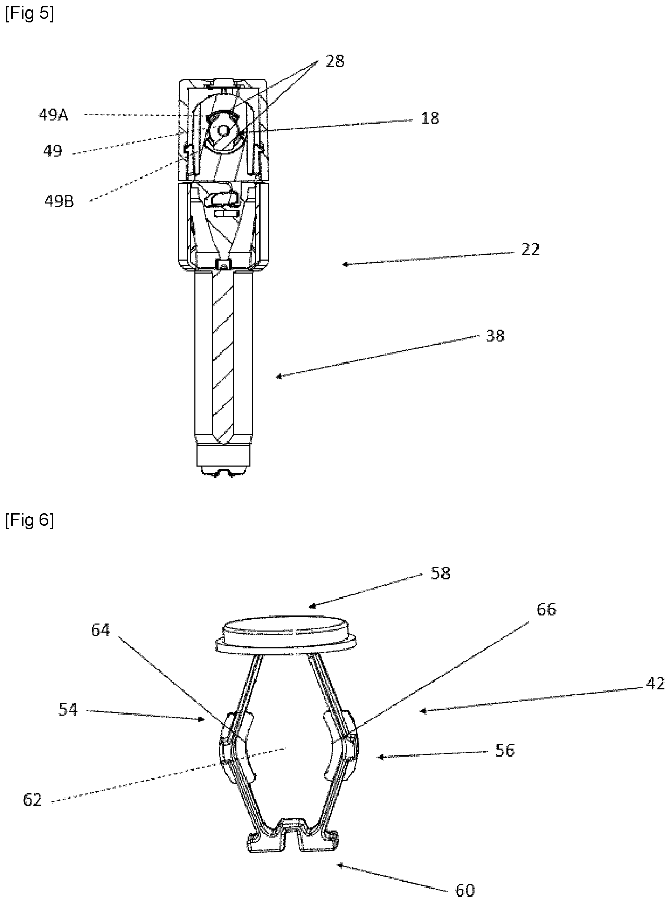

Comme visible à la figure 5, le logement d'accueil 49 comprend au moins un relief 49A de butée propre à coopérer avec le au moins un relief de blocage 28 pour limiter la rotation du corps principal 40 par rapport à la sortie de distribution 18. De préférence le logement d'accueil comprend deux reliefs de butée 49A, 49B propres à coopérer avec les reliefs de blocage 28. Les reliefs de butée 49A, 49B sont par exemple des logements de réception des reliefs de blocage 28 définissant une butée gauche et une butée droite de limitation de la rotation de l'accessoire 22 autour de la sortie de distribution 18 suivant les deux sens de rotation possibles.

Avantageusement, l'organe de réception 32 définit un conduit de circulation d'eau chaude/vapeur non visible sur les figures.

La pièce d'habillage 34 est propre à recouvrir au moins partiellement l'organe de réception 32 et définit des orifices de passages 51, 52, visibles à la figure 3, en regard de l'orifice d'insertion 44 et de l'orifice d'accès 46.

La sortie d'amenée d'eau chaude/vapeur 36 est relié fluidiquement au conduit de circulation d'eau chaude/vapeur qui est lui-même relié fluidiquement à la sortie de distribution 18 lorsque l'accessoire 22 est fixé à celle-ci.

La buse vapeur 38 est propre à être fixée de manière amovible sur la sortie d'amenée d'eau chaude/vapeur 36 et à recevoir de l'eau chaude/vapeur en provenance de la sortie 36.

Dans l'exemple représenté le corps principal 40 est avantageusement confondu avec l'organe de réception 32 et comprend donc l'orifice 44 d'insertion, l'orifice 46 d'accès, le logement d'accueil 48 et le logement d'accueil 49.

Comme représenté à la figure 6, l'élément de verrouillage 42 comprend deux bras élastiquement déformables 54, 56 propres à coopérer avec le relief de verrouillage 26. Les bras 54, 56 sont propres à être déplacés entre une position de verrouillage (représentée sur les figures) de l'accessoire 22 sur la sortie de distribution et une position de déverrouillage. La position de verrouillage est avantageusement la position de repos dans laquelle les bras 54, 56 sont élastiquement rappelés lorsqu'aucune contrainte n'est exercée sur l'élément de verrouillage 42.

L'élément de verrouillage 42 comprend également une surface d'appui 58 sur laquelle l'utilisateur est propre à exercer un effort pour déplacer les bras 54, 56 de la position de verrouillage vers la position de déverrouillage.

En d'autres termes, les bras 54, 56 sont propres à être déplacés dans la position de déverrouillage via un appui utilisateur sur la surface d'appui 58 et à retrouver la position de verrouillage après arrêt de l'appui utilisateur.

La surface d'appui 58 est accessible pour l'utilisateur au travers de l'orifice d'accès 46.

Dans l'exemple représenté, l'élément de verrouillage 42 a une forme globale hexagonale et les deux bras 54, 56 s'étendent entre la surface d'appui 58, formant une extrémité supérieur de l'élément de verrouillage 42 et une surface de liaison 60, formant une extrémité inférieur de l'élément de verrouillage 42.

Avantageusement, la surface d'appui 58, les deux bras 54, 56 et la surface de liaison 60 sont formés par une pièce monobloc.

En position de déverrouillage la surface d'appui 58 est plus proche de la surface de liaison 60 qu'en position de verrouillage.

L'élément de verrouillage 42 comprend un orifice 62 de passage de la sortie de distribution 18 s'étendant entre les deux bras 54, 56 au travers duquel la sortie de distribution 18 est agencée lorsque l'accessoire 22 est fixé à la sortie de distribution 18.

Avantageusement, l'orifice 62 est délimité par les bras 54, 56, la surface d'appui 58 et la surface de liaison 60.

La surface de liaison 60 est destinée à être en contact avec la paroi inférieure d'appui 50.

Chaque bras 54, 56 comprend un crochet 64, 66 propre à coopérer avec le relief de verrouillage 26 pour verrouiller l'accessoire 22 sur la sortie de distribution 18.

Comme visible à la figure 4, chaque crochet 64, 66 est muni d'un chanfrein 64A, 66A propre à coopérer avec la face avant 26A du relief de verrouillage 26 pour déplacer le bras correspondant 54, 56 en position de déverrouillage lors de la fixation de l'accessoire 22 à la sortie de distribution 18 via un mouvement de translation du système de fixation 30 le long de la sortie de distribution 18 représenté par la flèche A.

Le relief de verrouillage 26 définit un logement de réception des crochets, 64, 66 et chaque crochet comprend une surface de butée 64B, 66B propre, lorsque l'accessoire 22 est fixé à la sortie de distribution 18, à coopérer avec la face arrière 26B du relief de verrouillage 26 pour maintenir l'accessoire fixé à la sortie de distribution. La face arrière 26B délimite le logement de réception.

Avantageusement, le logement d'accueil 49 définit une butée axiale propre à venir en contact avec une face de la sortie de distribution 18 pour définir une position maximale d'insertion de la sortie de distribution 18 dans le logement d'accueil 49. La position maximale d'insertion correspond avantageusement à une position de fixation dans laquelle les surfaces de butée 64B, 66B sont en regard de la face arrière 26B de préférence à proximité de la face arrière 26B du relief 26 de sorte que la butée axiale et les surfaces de butée 64B, 66B, de par leur coopération avec la sortie de distribution 18, maintiennent l'accessoire verrouillé sur la sortie de distribution 18.

Le fonctionnement du système de fixation 30 va être décrit par la suite à l'aide de la description d'une phase de montage/démontage de l'accessoire 22 sur la sortie de distribution 18.

Au cours d'une première étape l'accessoire 22 est fourni à l'utilisateur.

Ensuite, l'utilisateur translate l'accessoire et notamment le corps principal 40 le long de la sortie de distribution 18 dans le sens de la flèche A de sorte que la sortie de distribution 18 est insérée au travers de l'orifice d'insertion 44. Au cours de cette étape, les chanfrein 64A, 66A entrent en contact avec la face avant 26A qui exerce un effort transversal sur les crochets 64, 66 de sorte à déplacer les bras 54, 56 dans la position de déverrouillage.

Puis, une fois que les crochets 64, 66 ont dépassé le relief de verrouillage 26, celui-ci n'exerce plus l'effort transversal précité et les bras reviennent dans leur position de verrouillage de sorte que les surfaces de butée 64B, 66B sont en regard de la face arrière 26B et que l'accessoire est fixé/verrouillé sur la sortie de distribution 18 et ne peut être retiré de la sortie de distribution via un mouvement de translation dans un sens opposé à celui de la flèche A. Avantageusement, suite à cette étape, les reliefs de blocage 28 sont reçus dans les logements formés par les reliefs de butée 49A, 49B et permette de limiter la rotation possible de l'accessoire par rapport à la sortie de distribution 18.

Lorsque l'utilisateur a fini d'utiliser l'accessoire 22 il peut alors le retirer de la sortie de distribution 18 en exerçant un effort d'appui sur la surface d'appui 58 de sorte à déplacer les bras 54, 56 de la position de verrouillage à la position de déverrouillage dans laquelle les surfaces de butée 64B, 66B ne sont plus en regard de la face arrière 26B, puis en déplaçant l'accessoire 22 et notamment le corps principal 40 le long de la sortie de distribution 18 dans le sens opposé à celui de la flèche A.

La manipulation de l'accessoire est ainsi facile pour l'utilisateur puisqu'une simple translation permet la fixation de l'accessoire et qu'un simple appui suivi d'une translation permet de séparer l'accessoire de la sortie de distribution 18. De plus la robustesse de la fixation est optimisée via la présence des deux crochets élastiquement déformables 64, 66. Ainsi, la sécurité de l'utilisateur est garantie lors de l'utilisation de l'accessoire et lors de la manipulation de celui-ci.

Dans le mode de réalisation de la figure 7 l'accessoire 122 est un pot à lait.

A cet effet, l'accessoire 122 comprend un récipient 124 propre à recevoir du lait et un organe de moussage 126 comprenant un canal d'entrée de lait, un canal d'entrée de vapeur et un canal de sortie de lait moussé non clairement visibles sur la figure 7.

Avantageusement l'organe de moussage comprend également un canal d'entrée d'air.

Avantageusement encore l'organe de moussage 126 forme un capot supérieur du récipient 124.

L'accessoire 122 comprend un système de fixation 130 globalement similaire au système de fixation 30 du premier mode de réalisation.

L'accessoire 122 comprend également un organe 132 de réception de la sortie de distribution d'eau chaude et/ou de vapeur qui est avantageusement monobloc avec l'organe de moussage et relié fluidiquement au canal d'entrée de vapeur.

L'accessoire 122 diffère de l'accessoire 22 en ce qu'il est dépourvu de sortie d'amenée de vapeur/eau chaude et de buse vapeur telles que décrites dans le premier mode de réalisation des figures 1 à 6.

Le système de fixation 130 et l'organe de réception 132 sont positionnés sur une première face latérale de l'accessoire 122 et notamment du récipient 124.

L'accessoire 122 comprend également une sortie 134 de distribution de lait moussé sur une deuxième face latérale de l'accessoire 122 et notamment du récipient 124. La sortie 134 est reliée fluidiquement au canal de sortie de lait moussé.

La première face latérale et la deuxième face latérale sont orientées sensiblement transversalement l'une à l'autre.

Bien entendu, l'invention n'est nullement limitée au mode de réalisation décrit et illustré qui n'a été donné qu'à titre d'exemple.

## Revendications

1. Système de fixation (30, 130) réversible d'un accessoire (22, 122) à une sortie de distribution (18) d'eau chaude et/ou de vapeur d'une machine de distribution de boisson (10), le système de fixation (30) comprenant :
- un corps principal (40) ; et
- un élément de verrouillage (42),
**caractérisé en ce que** l'élément de verrouillage (42) est reçu dans le corps principal (40) et comprend deux bras (54, 56) élastiquement déformables propres à coopérer avec au moins un relief de verrouillage (26) formé sur la sortie de distribution, les bras (54, 56) étant propres à être déplacés entre une position de verrouillage de l'accessoire (22, 122) sur la sortie de distribution (18) et une position de déverrouillage.

2. Système de fixation selon la revendication 1, **caractérisé en ce que** l'élément de verrouillage (42) comprend une surface d'appui (58), et **en ce que** les bras (54, 56) sont propres à être déplacés dans la position de déverrouillage via un appui utilisateur sur la surface d'appui (58) et à retrouver la position de verrouillage après arrêt de l'appui utilisateur.

3. Système de fixation selon la revendication 2, **caractérisé en ce que** le corps principal comprend un orifice d'accès (46) à la surface d'appui (58).

4. Système de fixation selon l'une quelconque des revendications précédentes, **caractérisé en ce que** l'élément de verrouillage (42) comprend un orifice de passage (44) de la sortie de distribution (18) s'étendant entre les deux bras (54, 56) au travers duquel la sortie de distribution (18) est agencée lorsque l'accessoire (22, 122) est fixé à la sortie de distribution (18).

5. Système de fixation selon l'une quelconque des revendications précédentes, **caractérisé en ce que** chaque bras (54, 56) comprend un crochet (64, 66) propre à coopérer avec le ou l'un des reliefs de verrouillage (26) pour verrouiller l'accessoire (22,122) sur la sortie de distribution (18).

6. Système de fixation selon la revendication 5, **caractérisé en ce que** chaque crochet (64, 66) est muni d'un chanfrein (64A, 66A) propre à coopérer avec une face avant (26A) du ou de l'un des reliefs de verrouillage (26) pour déplacer le bras (54, 56) correspondant en position de déverrouillage lors de la fixation de l'accessoire (22,122) à la sortie de distribution (18) via un mouvement de translation du système de fixation (30, 130) le long de la sortie de distribution (18).

7. Système de fixation selon la revendication 5 ou 6, **caractérisé en ce que** , le ou chaque relief de verrouillage (26) définit un logement de réception des ou de l'un des crochets (64, 66), et **en ce que** chaque crochet (64, 66) comprend une surface de butée (64b, 66B) propre, lorsque l'accessoire (22,122) est fixé à la sortie de distribution, à coopérer avec une face arrière (26B) du ou des l'un des reliefs de verrouillage (26) délimitant le logement de réception pour maintenir l'accessoire (22, 122) fixé à la sortie de distribution (18).

8. Système de fixation selon l'une quelconque des revendications précédentes, **caractérisé en ce que** le corps principal (40) comprend au moins un relief de butée (49A, 49B) propre à limiter la rotation du corps principal (40) par rapport à la sortie de distribution (18).

9. Accessoire (22, 122) pour machine de distribution de boisson (10) comprenant un système de fixation (30, 130) réversible de l'accessoire à une sortie de distribution (18) d'eau chaude et/ou de vapeur de la machine de distribution de boisson (10), **caractérisé en ce que** le système de fixation (30, 130) est selon l'une quelconque des revendications précédentes.

10. Machine de distribution de boisson (10) comprenant une sortie de distribution (18) d'eau chaude et/ou de vapeur et un accessoire (22, 122) propre à être fixé à la sortie de distribution (18), **caractérisé en ce que** l'accessoire (22, 122) est selon la revendication précédente.

## Patentansprüche

1. Umkehrbares Befestigungssystem (30, 130) für ein Zubehör (22, 122) an einem Ausgabeschacht (18) für heißes Wasser und/oder Dampf einer Getränkespendermaschine (10), wobei das Befestigungssystem (30) umfasst:
- einen Hauptkörper (40); und
- ein Verriegelungselement (42), **dadurch gekennzeichnet, dass** das Verriegelungselement (42) im Hauptkörper (40) aufgenommen ist und zwei elastisch verformbare Arme (54, 56) umfasst, die geeignet sind, mit mindestens einem Verriegelungsvorsprung (26) am Ausgabeschacht zusammenzuwirken, wobei die Arme (54, 56) zwischen einer Verriegelungsposition des Zubehörs (22, 122) am Ausgabeschacht (18) und einer Entriegelungsposition beweglich sind.

2. Befestigungssystem nach Anspruch 1, **dadurch gekennzeichnet, dass** das Verriegelungselement (42) eine Stützfläche (58) umfasst und die Arme (54, 56) durch Druck des Benutzers auf die Stützfläche (58) in die Entriegelungsposition bewegt werden können und nach dem Ende des Drucks des Benutzers wieder die Verriegelungsposition erreichen.

3. Befestigungssystem nach Anspruch 2, **dadurch gekennzeichnet, dass** der Hauptkörper eine Zugangsöffnung (46) zur Stützfläche (58) umfasst.

4. Befestigungssystem nach einem der vorhergehenden Ansprüche, **dadurch gekennzeichnet, dass** das Verriegelungselement (42) einen Durchgangsöffnung (44) für den Ausgabeschacht (18) umfasst, die sich zwischen den beiden Armen (54, 56) erstreckt und durch die der Ausgabeschacht (18) angeordnet ist, wenn das Zubehör (22, 122) am Ausgabeschacht (18) befestigt ist.

5. Befestigungssystem nach einem der vorhergehenden Ansprüche, **dadurch gekennzeichnet, dass** jeder Arm (54, 56) einen Haken (64, 66) umfasst, der geeignet ist, mit dem oder einer der Verriegelungsvorsprünge (26) zusammenzuwirken, um das Zubehör (22, 122) am Ausgabeschacht (18) zu verriegeln.

6. Befestigungssystem nach Anspruch 5, **dadurch gekennzeichnet, dass** jeder Haken (64, 66) mit einer Fase (64A, 66A) versehen ist, die geeignet ist, mit einer Vorderseite (26A) des oder eines der Verriegelungsvorsprünge (26) zusammenzuwirken, um den entsprechenden Arm (54, 56) in die Entriegelungsposition zu bewegen beim Befestigen des Zubehörs (22, 122) am Ausgabeschacht (18) durch eine Translationsbewegung des Befestigungssystems (30, 130) entlang des Ausgabeschachts (18).

7. Befestigungssystem nach Anspruch 5 oder 6, **dadurch gekennzeichnet, dass** der oder jeder Verriegelungsvorsprung (26) ein Aufnahmegehäuse für den oder einen der Haken (64, 66) definiert, und dass jeder Haken (64, 66) eine Anschlagfläche (64B, 66B) umfasst, die geeignet ist, wenn das Zubehör (22, 122) am Ausgabeschacht befestigt ist, mit einer Rückseite (26B) des oder eines der Verriegelungsvorsprünge (26) zusammenzuwirken, die das Aufnahmegehäuse abgrenzt, um das Zubehör (22, 122) am Ausgabeschacht (18) fest zu halten.

8. Befestigungssystem nach einem der vorhergehenden Ansprüche, **dadurch gekennzeichnet, dass** der Hauptkörper (40) mindestens einen Anschlagvorsprung (49A, 49B) umfasst, der geeignet ist, die Drehung des Hauptkörpers (40) relativ zum Ausgabeschacht (18) zu begrenzen.

9. Zubehör (22, 122) für Getränkespendermaschine (10) mit einem umkehrbaren Befestigungssystem (30, 130) für das Zubehör an einem Ausgabeschacht (18) für heißes Wasser und/oder Dampf der Getränkespendermaschine (10), **dadurch gekennzeichnet, dass** das Befestigungssystem (30, 130) nach einem der vorhergehenden Ansprüche ist.

10. Getränkespendermaschine (10) mit einem Ausgabeschacht (18) für heißes Wasser und/oder Dampf und einem Zubehör (22, 122), das am Ausgabeschacht (18) befestigt werden kann, **dadurch gekennzeichnet, dass** das Zubehör (22, 122) nach dem vorhergehenden Anspruch ist.

## Claims

1. Reversible attachment system (30, 130) for an accessory (22, 122) to a dispensing outlet (18) of hot water and/or steam from a beverage dispensing machine (10), the attachment system (30) comprising:
- a main body (40); and
- a locking element (42), **characterized in that** the locking element (42) is received in the main body (40) and comprises two elastically deformable arms (54, 56) adapted to cooperate with at least one locking relief (26) formed on the dispensing outlet, the arms (54, 56) being adapted to be moved between a locking position of the accessory (22, 122) on the dispensing outlet (18) and an unlocking position.

2. Attachment system according to claim 1, **characterized in that** the locking element (42) comprises a pressing surface (58), and **in that** the arms (54, 56) are adapted to be moved to the unlocking position via user pressure on the pressing surface (58) and to return to the locking position after cessation of user pressure.

3. Attachment system according to claim 2, **characterized in that** the main body comprises an access opening (46) to the pressing surface (58).

4. Attachment system according to any one of the preceding claims, **characterized in that** the locking element (42) comprises a passage opening (44) for the dispensing outlet (18) extending between the two arms (54, 56) through which the dispensing outlet (18) is arranged when the accessory (22, 122) is attached to the dispensing outlet (18).

5. Attachment system according to any one of the preceding claims, **characterized in that** each arm (54, 56) comprises a hook (64, 66) adapted to cooperate with the or one of the locking reliefs (26) to lock the accessory (22, 122) on the dispensing outlet (18).

6. Attachment system according to claim 5, **characterized in that** each hook (64, 66) is provided with a chamfer (64A, 66A) adapted to cooperate with a front face (26A) of the or one of the locking reliefs (26) to move the corresponding arm (54, 56) to the unlocking position during the attachment of the accessory (22, 122) to the dispensing outlet (18) via a translational movement of the attachment system (30, 130) along the dispensing outlet (18).

7. Attachment system according to claim 5 or 6, **characterized in that** the or each locking relief (26) defines a receiving housing for the or one of the hooks (64, 66), and **in that** each hook (64, 66) comprises a stop surface (64B, 66B) adapted, when the accessory (22, 122) is attached to the dispensing outlet, to cooperate with a rear face (26B) of the or one of the locking reliefs (26) delimiting the receiving housing to maintain the accessory (22, 122) attached to the dispensing outlet (18).

8. Attachment system according to any one of the preceding claims, **characterized in that** the main body (40) comprises at least one stop relief (49A, 49B) adapted to limit the rotation of the main body (40) relative to the dispensing outlet (18).

9. Accessory (22, 122) for beverage dispensing machine (10) comprising a reversible attachment system (30, 130) for the accessory to a dispensing outlet (18) of hot water and/or steam from the beverage dispensing machine (10), **characterized in that** the attachment system (30, 130) is according to any one of the preceding claims.

10. Beverage dispensing machine (10) comprising a dispensing outlet (18) of hot water and/or steam and an accessory (22, 122) adapted to be attached to the dispensing outlet (18), **characterized in that** the accessory (22, 122) is according to the preceding claim.
